(19) Europäisches Patentamt
European Patent Office
Office européen des brevets

(11) Veröffentlichungsnummer: **0 373 451 B1**

# (12) EUROPÄISCHE PATENTSCHRIFT

(45) Veröffentlichungstag der Patentschrift: **28.04.93**

(51) Int. Cl.[5]: **C09D 183/14**, C08G 77/58

(21) Anmeldenummer: **89122229.1**

(22) Anmeldetag: **26.02.85**

(60) Veröffentlichungsnummer der früheren Anmeldung nach Art. 76 EPÜ: **0 171 493**

Die Akte enthält technische Angaben, die nach dem Eingang der Anmeldung eingereicht wurden und die nicht in dieser Patentschrift enthalten sind.

## (54) Verfahren und Lack zur Herstellung von kratzfesten Beschichtungen.

(30) Priorität: **27.02.84 DE 3407087**

(43) Veröffentlichungstag der Anmeldung:
**20.06.90 Patentblatt 90/25**

(45) Bekanntmachung des Hinweises auf die Patenterteilung:
**28.04.93 Patentblatt 93/17**

(84) Benannte Vertragsstaaten:
**AT BE CH DE FR GB IT LI LU NL SE**

(56) Entgegenhaltungen:
**EP-A- 0 011 209**
**FR-A- 2 287 489**
**FR-A- 2 413 415**
**GB-A- 2 068 010**

(73) Patentinhaber: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **Philipp, Gottfried, Dr.**
**St.-Josef-Strasse 7**
**W-8150 Holzkirchen(DE)**
Erfinder: **Schmidt, Helmut, Dr.**
**Am Schlosssand 9**
**W-8705 Zellingen(DE)**

(74) Vertreter: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40 (DE)**

**EP 0 373 451 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Zahlreiche Gegenstände müssen mit kratzfesten Beschichtungen versehen werden, da ihre Kratzempfindlichkeit keinen praktischen Einsatz oder nur kurze Einsatzzeiten ermöglicht. Die bekannten kratzfesten Beschichtungsmaterialien (siehe z.B. FR-A-2287489 und GB-A-2068010) bringen zumeist keine ausreichende Verbesserung, da sie entweder nicht kratzbeständig genug sind oder aber keine ausreichende Haftung bei geeigneter Schichtdicke auf dem Substrat besitzen. Daneben sind oft lange Aushärtungszeiten erforderlich.

Aufgabe der Erfindung ist es daher, ein Verfahren und einen Lack zur Herstellung von Beschichtungen bereitzustellen, die hohe Kratztestständigkeit und Haftfestigkeit auf dem Substrat bei gleichzeitig guten optischen Eigenschaften, insbesondere Transparenz, aufweisen.

Gegenstand der Erfindung ist ein Lack für kratzfeste Beschichtungen, der erhalten worden ist durch hydrolytische Vorkondensation von

a) mindestens einer im Reaktionsmedium löslichen Titanverbindung der Formel I

$TiR_4$ (I)

in der R Halogen, Hydroxy, Alkoxy, Acyloxy oder einen Chelatliganden darstellt;

b) mindestens einem organofunktionellen Silan der Formel II

$R'_m (R'' Y)_n SiX_{(4-m-n)}$ (II)

in der R' Alkyl oder Alkenyl bedeutet, R" Alkylen oder Alkenylen darstellt, wobei diese Reste durch Sauerstoff- oder Schwefelatome oder -NH-Gruppen unterbrochen sein können, X.Wasserstoff, Halogen, Hydroxy, Alkoxy, Acyloxy oder die Gruppe $-NR'''_2$ (R"' = Wasserstoff und/oder Alkyl) bedeutet, Y Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe ist, m und n den Wert 0, 1, 2 oder 3 haben, wobei m + n den Wert 1, 2 oder 3 hat;

und gegebenenfalls

mindestens einem im Reaktionsmedium löslichen, schwerflüchtigen Oxid eines Elementes der Hauptgruppen Ia bis Va oder der Nebengruppen IVb oder Vb des Periodensystems, mit Ausnahme von Titan, oder mindestens einer im Reaktionsmedium löslichen, unter den Reaktionsbedingungen ein schwerflüchtiges Oxid bildenden Verbindung eines dieser Elemente;

mit einer geringeren Wassermenge als der zur vollständigen Hydrolyse der hydrolysierbaren Gruppen stöchiometrisch erforderlichen Menge, die mittels feuchtigkeitshaltiger Adsorbentien, wasserhaltiger organischer Lösungsmittel oder Salzhydraten eingetragen wird, gegebenenfalls in Gegenwart eines Kondensationskatalysators, wobei, bezogen auf die Gesamt-Molzahl der Ausgangskomponenten, 5 bis 70 Mol-% der Komponente (a), 30 bis 95 Mol-% der Komponente (b) und und 0 bis 65 Mol-% der Komponente (c) verwendet worden sind.

Gegenstand der Erfindung ist ferner ein Lack, der durch anschließende Weiterkondensation unter Zugabe mindestens der Wassermenge, die zur Hydrolyse der verbliebenen hydrolysierbaren Gruppen erforderlich ist, sowie gegebenenfalls eines Kondensationskatalysators, erhalten worden ist. Die Erfindung betrifft außerdem ein Verfahren zur Herstellung von kratzfesten Beschichtungen durch Aufbringen und Härten des vorkondensierten oder weiterkondensierten Lackes sowie die auf diese Weise mit kratzfesten Beschichtungen versehenen Substrate.

In den vorstehenden Formeln (I) und (II) können mehrmals vorhandene Reste R, R', R'', R''', X bzw. Y bei einer Verbindung jeweils die gleiche oder unterschiedliche Bedeutung haben.

Die Alkylreste bedeuten z.B. geradkettige, verzweigte oder cyclische Reste mit 1 bis 10 Kohlenstoffatomen und insbesondere niedere Alkylreste mit 1 bis 6, vorzugsweise 1 bis 4 Kohlenstoffatomen. Spezielle Beispiele sind Methyl, Ethyl, n-Propyl, Isopropyl, n-Butyl, sek.-Butyl, tert.-Butyl, Isobutyl, n-Pentyl, n-Hexyl und Cyclohexyl.

Die Alkenylreste sind z.B. geradkettige, verzweigte oder cyclische Reste mit 2 bis 10 Kohlenstoffatomen und insbesondere niedere Alkenylreste, wie Vinyl, Allyl und 2-Butenyl.

Die Alkoxy-, Acyloxy-, Alkylen-, Alkenylen-, Alkylamino-, Dialkylamino-, Alkylcarbonyl-, Alkoxycarbonyl- und die substituierten Aminoreste oder Amidreste Y leiten sich z.B. von den vorstehend genannten Alkyl- und Alkenylresten ab. Spezielle Beispiele sind Methoxy, Ethoxy, n- und i-Propoxy, n-, sek.- und tert-. Butoxy, Isobutoxy, β-Methoxyethoxy, Acetyloxy, Propionyloxy, Monomethylamino, Monoethylamino, Dimethylamino, Diethylamino, Ethylen, Propylen, Butylen, Methylcarbonyl, Ethylcarbonyl, Methoxycarbonyl und Ethoxycarbonyl.

Die genannten Reste können gegebenenfalls übliche Substituenten tragen, z.B. Halogenatome, niedere Alkylreste, Hydroxy-, Nitro- oder Aminogruppen.

Unter den Halogenen sind Fluor, Chlor und Brom bevorzugt und Chlor besonders bevorzugt.

Spezielle Beispiele für Titanverbindungen
(a) sind $TiCl_4$, $Ti(OC_2H_5)_4$, $Ti(OC_3H_7)_4$,
$Ti(O\text{-}i\text{-}C_3H_7)_4$, $Ti(OC_4H_9)_4$,
$Ti(acetylacetonato)_2(O\text{-}i\text{-}C_3H_7)_2$,
$Ti(2\text{-}ethylhexoxy)_4$ und andere Titankomplexe mit Chelatliganden, die vorzugsweise über Sauerstoff und/oder Stickstoff koordiniert sind.

Bei den organofunktionellen Silanen (b) kann die Brückengruppe $R''$ gegebenenfalls durch Sauerstoff- oder Schwefelatome oder -NH-Gruppen unterbrochen sein. Vorzugsweise entstehen auf diese Art 2 bis 10 sich wiederholende Struktureinheiten.

Spezielle Beispiele für organofunktionelle Silane (b) sind:
$CH_3\text{-}Si\text{-}Cl_3$, $CH_3\text{-}Si\text{-}(OC_2H_5)_3$, $C_2H_5\text{-}Si\text{-}Cl_3$,
$C_2H_5\text{-}Si\text{-}(OC_2H_5)_3$, $CH_2=CH\text{-}Si\text{-}(OC_2H_5)_3$,
$CH_2=CH\text{-}Si\text{-}(OC_2H_4OCH_3)_3$, $CH_2=CH\text{-}Si\text{-}(OOCCH_3)_3$,
$(CH_3)_2\text{-}Si\text{-}Cl_2$, $(CH_3)_2\text{-}Si\text{-}(OC_2H_5)_2$, $(C_2H_5)_2\text{-}Si\text{-}(OC_2H_5)_2$,
$(CH_3)(CH_2=CH)\text{-}Si\text{-}Cl_2$, $(CH_3)_3\text{-}Si\text{-}Cl$, $(C_2H_5)_3\text{-}Si\text{-}Cl$,
$(t\text{-}C_4H_9)(CH_3)_2\text{-}Si\text{-}Cl$, $(CH_3)_2(CH_2=CH\text{-}CH_2)\text{-}Si\text{-}Cl$,
$(CH_3O)_3\text{-}Si\text{-}C_3H_6\text{-}Cl$, $(C_2H_5O)_3\text{-}Si\text{-}C_3H_6\text{-}NH_2$,
$(C_2H_5O)_3\text{-}Si\text{-}C_3H_6\text{-}CN$, $(CH_3O)_3\text{-}Si\text{-}C_3H_6\text{-}SH$,
$(CH_3O)_3\text{-}Si\text{-}C_3H_6\text{-}NH\text{-}C_2H_4\text{-}NH_2$,
$(CH_3O)_3\text{-}Si\text{-}C_3H_6\text{-}NH\text{-}C_2H_4\text{-}NH\text{-}C_2H_4\text{-}NH_2$,

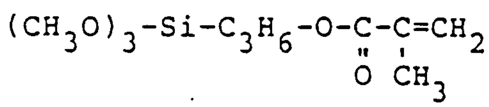

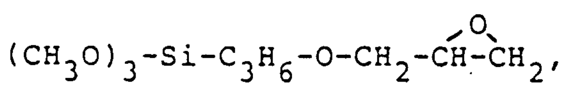

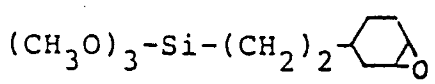

Diese Silane sind zum Teil Handelsprodukte oder sie lassen sich nach bekannten Methoden herstellen; vgl. W. Noll, "Chemie und Technologie der Silicone", Verlag Chemie GmbH, Weinheim/Bergstrasse (1968).

Als Komponente (c) werden im Reaktionsmedium lösliche, schwerflüchtige Oxide oder derartige schwerflüchtige Oxide bildende Verbindungen von Elementen der Hauptgruppen Ia bis Va oder der Nebengruppen IVb oder Vb des Periodensystems eingesetzt. Vorzugsweise leitet sich die Komponente (c) von folgenden Elementen ab: Na, K, Mg, Ca, B, Al, Si, Sn, Pb, P, As, Sb und/oder V, wobei B, Al, Si, Sn und P besonders bevorzugt sind.

Unter den schwerflüchtigen Oxiden sind $B_2O_3$, $P_2O_5$ und $SnO_2$ besonders bevorzugt.

Im Reaktionsmedium lösliche, schwerflüchtige Oxide bildende Verbindungen sind z.B. anorganische Säuren, wie Phosphorsäure und Borsäure, sowie deren Ester. Ferner eignen sich z.B. Halogenide, wie $SiCl_4$, $HSiCl_3$, $SnCl_4$ und $PCl_5$, und Alkoxide, wie NaOR, KOR, $Ca(OR)_2$, $Al(OR)_3$, $Si(OR)_4$, $Sn(OR)_4$ und $VO(OR)_3$, wobei sich R von niederen Alkoholen, wie Methanol, Ethanol, Propanol oder Butanol, ableitet. Weitere verwendbare Ausgangsverbindungen sind entsprechende Salze mit flüchtigen Säuren, z.B. Acetate, wie Siliciumtetraacetat, basische Acetate, wie basisches Bleiacetet, und Formiate.

Vorzugsweise verwendet man zur Herstellung des Lacks 20 bis 40 Mol-% der Komponente (a), 40 bis 80 Mol-% der Komponente (b) und höchstens 40 Mol-% der Komponente (c).

Zur Herstellung des Lacks werden die Ausgangskomponenten im gewünschten Mischungsverhältnis mit einer geringeren Wassermenge als der zur vollständigen Hydrolyse aller eingesetzten hydrolysierbaren Gruppen stöchiometrisch erforderlichen Menge vorkondensiert. Diese unterstöchiometrische Wassermenge

wird so zudosiert,
daß lokale Überkonzentrationen vermieden werden. Dies gelingt durch Eintragen der Wassermenge in das Reaktionsgemisch mit Hilfe von feuchtigkeitsbeladenen Adsorbentien, z.B. Kieselgel oder Molekularsieben, wasserhaltigen organischen Lösungsmitteln, z.B. 80-prozentigem Ethanol, oder Salzhydraten, z.B. $CaCl_2 \cdot 6H_2O$.

Vorzugsweise erfolgt die Vorkondensation in Gegenwart eines Kondensationskatalysators, jedoch in Abwesenheit eines organischen Lösungsmittels. Gegebenenfalls kann jedoch ein mit Wasser zumindest teilweise mischbares organisches Lösungsmittel angewandt werden, z.B. ein aliphatischer Alkohol, wie Ethanol, Propanol, Isopropanol oder Butanol, ein Ether, wie Dimethoxyethan, ein Ester, wie Dimethylglykolacetat, oder ein Keton, wie Aceton oder Methylethylketon. Eventuell während der Vorkondensation zugesetztes oder gebildetes Lösungsmittel wird vorzugsweise nicht abgedampft, sondern das Reaktionsgemisch wird als solches zur Weiterkondensation eingesetzt.

Als Kondensationskatalysatoren eigenen sich Protonen oder Hydroxylionen abspaltende Verbindungen und Amine. Spezielle Beispiele sind organische oder anorganische Säuren, wie Salzsäure, Schwefelsäure, Phosphorsäure, Ameisensäure oder Essigsäure, sowie organische oder anorganische Basen, wie Ammoniak, Alkali- oder Erdalkalimetallhydroxide, z.B. Natrium-, Kalium- oder Calciumhydroxid, und im Reaktionsmedium lösliche Amine, z.B. niedere Alkylamine oder Alkanolamine. Hierbei sind flüchtige Säuren und Basen, insbesondere Salzsäure, Ammoniak und Triethylamin, besonders bevorzugt. Die Gesamt-Katalysatorkonzentration kann z.B. bis zu 3 Mol/Liter betragen.

Die Vorkondensation wird üblicherweise bei Temperaturen von Raumtemperatur bis 100 ° C, vorzugsweise bei Raumtemperatur durchgeführt. Bei Verwendung eines organischen Lösungsmittels kann die Vorkondensation auch bei Temperaturen bis zur Siedetemperatur des Lösungsmittels erfolgen, wird jedoch auch hier vorzugsweise bei Raumtemperatur durchgeführt.

Die Vorkondensation wird soweit geführt, daß das entstehende Vorkondensat noch flüssige Konsistenz hat. Da der erhaltene Vorkondensatlack hydrolyseempfindlich ist, muß er unter Feuchtigkeitsausschluß aufbewahrt werden.

Die anschließende hydrolytische Weiterkondensation des Vorkondensats erfolgt in Gegenwart mindestens der Wassermenge, die zur Hydrolyse der noch verbliebenen hydrolysierbaren Gruppen stöchiometrisch erforderlich ist, vorzugsweise jedoch mit einer überstöchiometrischen Wassermenge. In einer aus praktischen Gründen bevorzugten Ausführungsform wird zur Weiterkondensation die Wassermenge eingesetzt, die zur vollständigen Hydrolyse der ursprünglich eingesetzten Ausgangskomponenten stöchiometrisch erforderlich wäre.

Die Weiterkondensation erfolgt vorzugsweise in Gegenwart eines der vorstehend genannten Kondensationskatalysatoren, wobei ebenfalls flüchtige Verbindungen bevorzugt sind. Die Gesamt-Katalysatorkonzentration kann z.B. bis zu 5 Mol/Liter betragen.

Bei der Weiterkondensation kann gegebenenfalls auch eines der vorstehend genannten organischen Lösungsmittel anwesend sein oder zugesetzt werden, wobei während der Vor- und Weiterkondensation gebildetes Lösungsmittel oder zur Vor-oder Weiterkondensation eventuell zugesetztes Lösungsmittel nach beendeter Weiterkondensation vorzugsweise nicht abgedampft wird.

Die Weiterkondensation erfolgt gewöhnlich bei Temperaturen von Raumtemperatur bis 100 ° C, vorzugsweise Raumtemperatur bis 80 ° C. Überraschenderweise hat sich gezeigt, daß beim Erhitzen des erhaltenen Lackes auf 40 bis 80 ° C ohne Abdampfen des Lösungsmittels eine Stabilisierung der Lackviskosität erzielt wird; d.h. die Viskosität bleibt nach erfolgter Polykondensation über längere Zeit im wesentlichen konstant.

Der Vorkondensatlack bzw. der durch Weiterkondensieren erhaltene Lack ist als solcher verwendungsfähig. Gegebenenfalls können jedoch üblich Lackadditive zugesetzt werden, z.B. organische Verdünnungsmittel, Verlaufmittel, Färbemittel (Farbstoffe oder Pigmente), UV-Stabilisatoren, Füllstoffe, Viskositätregler oder Oxidationsinhibitoren.

Die Verarbeitung der Lacke muß innerhalb einer bestimmten Topfzeit erfolgen, die für das Weiterkondensat nach der obengenannten bevorzugten Ausführungsform z.B. mindestens etwa 1 Woche beträgt. Zur Beschichtung werden übliche Beschichtungsverfahren angewandt, z.B. das Tauchen, Fluten, Gießen, Schleudern, Spritzen oder Aufstreichen. Als Substrate eignen sich beliebige Werkstoffe, z.B. Metalle, Kunststoffe, Keramik, Glas oder Holz. Auch die Form des Substrats kann beliebig gewählt werden. Besonders vorteilhafte Ergebnisse werden mit kratzempfindlichen Kunststoffen erzielt, z.B. Polymethacrylaten, Polycarbonaten, Polystyrolen, insbesondere mit Poly(diethylenglykolbis-allylcarbonat).

Die Beschichtung wird in Schichtdicken von z.B. 1 bis 100 µm, vorzugsweise 5 bis 50 µm und insbesondere 10 bis 30 µm aufgetragen. Gegebenenfalls kann das Substrat vor Aufbringen der erfindungsgemäßen Beschichtung mit einer Haftvermittler- oder Primerschicht grundiert werden.

Der aufgetragene Lack wird anschließend ausgehärtet, indem man ihn wärmebehandelt. Zur Aushärtung genügt im allgemeinen ein einige Minuten bis 1 Stunde dauerndes Erhitzen auf eine Temperatur von 150 °C, vorzugsweise 60 bis 130 °C. Lediglich im Falle des Vorkondensatlackes können etwas längere Härtungszeiten erforderlich sein, z.B. bis zu 2 Stunden.

Der Vorkondensatlack reagiert aufgrund seiner Hydrolyseempfindlichkeit mit der Luftfeuchtigkeit und kann daher wie ein herkömmlicher lufttrocknender Lack angewandt werden.

Falls der Vorkondensatlack oder der weiterkondensierte Lack aufgrund der Verwendung entsprechender Ausgangskomponenten polymerisierbare Gruppen enthält, kann die aufgetragene Lackschicht zusätzlich auch photoschemisch gehärtet werden, z.B. mit UV-Strahlen. In diesem Fall werden der Lackformulierung vorzugsweise Photoinitiatoren zugesetzt.

Die nach dem erfindungsgemäßen Verfahren beschichteten Substrate besitzen gute Kratzfestigkeit und Haftung zwischen Überzug und Substrat, wobei die Haftung auf Kunststoffsubstraten durch eine Primerschicht verbessert werden kann. Die Beschichtungen sind zwischen -20 und +70 °C temperaturwechselbeständig. Aufgrund der guten Klarheit und Transparenz der Überzüge eignet sich das erfindungsgegemäße Verfahren insbesondere zur kratzfesten Beschichtung von optischen Kunststofflinsen, z.B. Kunststoff-Brillengläsern.

Die folgenden Beispiele erläutern die Erfindung.

Beispiel 1

1653 g 3-Glycidoxypropyltrimethoxysilan und 684 g Tetraethyltitanat werden mit 125 g Kieselgel, das mit 135 g 0,1 N wäßriger Salzsäure beladen ist, bei Raumtemperatur 60 Minuten verrührt, mindestens aber so lange, bis bei Zugabe eines Tropfen Wassers kein Niederschlag entsteht. Anschließend wird das Kieselgel abfiltriert. In das klare Filtrat werden bei Raumtemperatur 721 g 0,1 N wäßrige Salzsäure eingerührt. Es entsteht eine klare, deutlich viskosere Lösung, deren Viskosität ebenfalls um <100% pro Tag zunimmt.

Dieser Lack wird z.B. durch Eintauchen des Substrats aufgezogen und 60 min bei 100 °C gehärtet. Solche Coatings sind klar und transparent; ≧ 20 µm dicke Coatings werden von einem Vickers-Diamanten unter 50 g Belastung nicht gekratzt.

Beispiel 2

1181 g 3-Glycidoxypropyltrimethoxysilan, 457 g Tetramethoxysilan und 456 g Tetraethyltitanat werden mit 125 g Kieselgel, das mit 135 g 0,001 N wäßriger Salzsäure beladen ist, bei Raumtemperatur 60 Minuten verrührt, mindestens aber so lange, bis bei Zugabe eines Tropfen Wassers kein Niederschlag entsteht. Anschließend wird das Kieselgel abfiltriert. In das klare Filtrat werden bei Raumtemperatur 721 g 0,001 N wäßrige Salzsäure, eingerührt (Hydrolysat), danach wird bei Raumtemperatur 2 Stunden weitergerührt. Es entsteht eine klare, deutlich viskosere Lösung, deren Viskosität um <100% pro Tag ansteigt.

Dieser Lack wird z.B. durch Eintauchen des Substrats aufgezogen und 45 Minuten bis 90° gehärtet. Solche Coatings sind klar und transparent; ≧20 µm dicke Coatings auf Polycarbonat werden von einem Vickers-Diamanten unter 50 g Belastung nicht gekratzt.

Beispiel 3

Das Hydrolysat von Beispiel 2 wird bei Raumtemperatur 2 Stunden weitergerührt, dann mit 1360 g Butanol verdünnt. Der Lack weist dann 16 Sekunden Auslaufzeit aus dem ISO-Becher auf. Die Lackviskosität steigt um <70% pro Tag.

Dieser Lack wird z.B. durch Eintauchen des Substrats aufgezogen und 45 Minuten bei 90°C gehärtet. Wenn mehrere Schichten durch Tauchlackierung aufgezogen werden, wird jede Schicht nur 10 Minuten bei 90°C angetrocknet; erst nach dem letzten Lackierungsschritt wird das Coating 45 Minuten bei 90°C gehärtet. Solche Coatings sind klar und transparent; ≧15 µm dicke Coatings auf Poly(diethylenglykol-bis-allylcarbonat) werden von einem Vickers-Diamanten unter 50 g Belastung nicht gekratzt und weisen eine gute Haftfestigkeit auf.

Beispiel 4

Das Hydrolysat von Beispiel 2 wird bei 70°C unter Verwendung eines Rückflußkühlers 2 Stunden weitergerührt. Es entsteht eine klare, deutlich viskosere Lösung. Nach Abkühlen auf Raumtemperatur wird

mit 1360 g Butanol verdünnt. Der Lack weist dann 34 Sekunden Auslaufzeit aus dem ISO-Becher auf. Die Lackviskosität steigt um ≦3% pro Tag.

Unter gleichen Beschichtungs- und Härtungsbedingungen wie in Beispiel 3 werden ähnlich kratzbeständige Coatings erzielt.

Beispiel 5

1181 g 3-Glycidoxypropyltrimethoxysilan, 457 g Tetramethoxysilan und 456 g Tetraethyltitanat werden mit 125 g Kieselgel, das mit 135 g 0,1 N wäßriger Natronlauge beladen ist, bei Raumtemperatur 60 Minuten verrührt, mindestens aber so lange, bis bei Zugabe eines Tropfen Wassers kein Niederschlag entsteht. Anschließend wird das Kieselgel abfiltriert. In das klare Filtrat werden bei Raumtemperatur 721 g Wasser eingerührt, danach wird bei 70°C unter Verwendung eines Rückflußkühlers 2 Stunden weitergerührt. Es entsteht eine klare, deutlich viskosere Lösung. Nach Abkühlen auf Raumtemperatur wird mit 1300 g Butanol verdünnt. Der Lack weist dann 35 Sekunden Auslaufzeit aus dem ISO-Becher auf. Die Lackviskosität steigt um ≦5% pro Tag.

Unter gleichen Beschichtungs- und Härtungsbedingungen wie in Beispiel 3 werden ähnlich kratzbeständige Coatings erzielt.

**Patentansprüche**

**1.** Lack für kratzfeste Beschichtungen, dadurch gekennzeichnet, daß er erhalten worden ist durch hydrolytische Vorkondensation von

a) mindestens einer im Reaktionsmedium löslichen Titanverbindung der Formel I

$TiR_4$ (I)

in der R Halogen, Hydroxy, Alkoxy, Acyloxy oder einen Chelatliganden darstellt;

b) mindestens einem organofunktionellen Silan der Formel II

$R'_m (R'' Y)_n SiX_{(4-m-n)}$ (II)

in der R' Alkyl oder Alkenyl bedeutet, R" Alkylen oder Alkenylen darstellt, wobei diese Reste durch Sauerstoff- oder Schwefelatome oder -NH-Gruppen unterbrochen sein können, X Wasserstoff, Halogen, Hydroxy, Alkoxy, Acyloxy oder die Gruppe $-NR'''_2$ (R''' = Wasserstoff und/oder Alkyl) bedeutet, Y Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe ist; m und n den Wert 0, 1, 2 oder 3 haben, wobei m + n den Wert 1, 2 oder 3 hat;

und gegebenenfalls

c) mindestens einem im Reaktionsmedium löslichen, schwerflüchtigen Oxid eines Elementes der Hauptgruppen Ia bis Va oder der Nebengruppe IVb oder Vb des Periodensystems, mit Ausnahme von Titan, oder mindestens einer im Reaktionsmedium löslichen, unter den Reaktionsbedingungen ein schwerflüchtiges Oxid bildenden Verbindung eines dieser Elemente;

mit einer geringeren Wassermenge als der zur vollständigen Hydrolyse der hydrolysierbaren Gruppen stöchiometrisch erforderlichen Menge, die mittels feuchtigkeitshaltiger Adsorbentien, wasserhaltiger organischer Lösungsmittel oder Salzhydraten eingetragen wird, gegebenenfalls in Gegenwart eines Kondensationskatalysators, wobei bezogen auf die Gasamt-Molzahl der Ausgangskomponenten, 5 bis 70 Mol-% der Komponente (a), 30 bis 95 Mol-% der Komponente (b) und und 0 bis 65 Mol-% der Komponente (c) verwendet worden sind,

**2.** Lack nach Anspruch 1, dadurch gekennzeichnet, daß er durch Zugabe mindestens der Wassermenge, die zur Hydrolyse der verbliebenen hydrolysierbaren Gruppen erforderlich ist, sowie gegebenenfalls eines Kondensationskatalysators weiterkondensiert worden ist.

**3.** Lack nach Anspruch 1 oder 2, dadurch gekennzeichnet, daß er übliche Lackadditive, wie organische Verdünnungsmittel, Verlaufmittel, Färbemittel, UV-Stabilisatoren, Füllstoffe, Viskositätsregler oder Oxidationsinhibitoren enthält.

**4.** Lack nach einem der Ansprüche 1 bis 3, dadurch gekennzeichnet, daß, bezogen auf die Gesamt-Molzahl der Ausgangskomponenten, 20 bis 40 Mol-% der Komponente (a), 40 bis 80 Mol-% der Komponente (b) und höchstens 40 Mol-% der Komponente (c) verwendet werden.

**5.** Verfahren zur Herstellung von kratzfesten Beschichtungen, dadurch gekennzeichnet, daß man einen Lack nach einem der Ansprüche 1 bis 4 auf ein Substrat aufbringt und härtet.

**6.** Verfahren nach Anspruch 5, dadurch gekennzeichnet, daß man die aufgetragene Lackschicht durch Wärmebehandlung bei einer Temperatur bis 150 °C, vorzugsweise 60 bis 130 °C, härtet.

**7.** Mit einer kratzfesten Beschichtung versehene Substrate, erhältlich nach dem Verfahren eines der Ansprüche 5 oder 6.

**Claims**

**1.** A lacquer for scratch-resistant coatings, characterized in that it has been obtained by hydrolytic precondensation of

a) at least one titanium compound which is soluble in the reaction medium and has the formula I

$TiR_4$ (I)

wherein R represents halogen, hydroxy, alkoxy, acyloxy or a chelate ligand;

b) at least one organofunctional silane of formula II

$R'_m (R''Y)_n SiX_{(4-m-n)}$ (II)

wherein R' denotes alkyl or alkenyl, R" represents alkylene or alkenylene, said radicals possibly being interrupted by oxygen or sulfur atoms or -NH- groups; X represents hydrogen, halogen, hydroxy, alkoxy, acyloxy or the group $-NR'''_2$ (R''' = hydrogen and/or alkyl); Y represents halogen or an optionally substituted amino, amide, aldehyde, alkylcarbonyl, carboxy, mercapto, cyano, alkoxy, alkoxycarbonyl, sulfonic acid, phosphoric acid, acryloxy, methacryloxy, epoxy or vinyl group; m and n have the value 0, 1, 2 or 3, with m + n having the value 1, 2 or 3;

and, optionally,

c) at least one low-volatility oxide, soluble in the reaction medium, of an element of main groups Ia to Va or sub-groups IVb or Vb of the Periodic System, with the exception of titanium, or at least one compound of one of these elements, soluble in the reaction medium, forming a low volatility-oxide under the reaction conditions;

with an amount of water smaller than that stoichiometrically required for the complete hydrolysis of the hydrolyzable groups, which is introduced by means of moisture-containing adsorbents, water-containing organic solvents or hydrated salts, optionally in the presence of a condensation catalyst with, based on the total number of moles of the starting components, 5 to 70 mole % of component (a), 30 to 95 mole % of component (b), and 0 to 65 mole % of component (c) having been used.

**2.** A lacquer according to claim 1, characterized in that it has been further condensed by addition of at least that amount of water required for hydrolysis of the remaining hydrolyzable groups as well as, optionally, a condensation catalyst.

**3.** A lacquer according to claim 1 or 2, characterized in that it comprises conventional lacquer additives, such as organic diluents, levelling agents, coloring agents, UV stabilizers, fillers, viscosity regulators or oxidation inhibitors.

**4.** A lacquer according to any of claims 1 to 3, characterized in that 20 to 40 mole % of component (a), 40 to 80 mole % of component (b) and not more than 40 mole % of component (c) are used.

**5.** A process for producing scratch-resistant coatings, characterized in that a lacquer according to any of claims 1 to 4 is applied onto a substrate and cured.

6. A process according to claim 5, characterized in that the lacquer layer applied is cured by heat treatment at a temperature of up to 150 ° C, preferably 60 to 130 ° C.

7. Substrates provided with a scratch-resistant coating obtainable according to the process of either of claims 5 or 6.

**Revendications**

1. Laque pour des revêtements résistant aux égratignures et à l'abrasion, caractérisée en ce qu'elle a été obtenue par précondensation hydrolytique de :
   (a) au moins un composé de titane, soluble dans le milieu de réaction et de formule I

   $TiR_4$ (I)

   dans laquelle R représente un atome d'halogène, un groupe hydroxy, alcoxy, acyloxy ou un ligand pour chélatation ;
   (b) au moins un silane contenant un ou des groupes fonctionnels organiques de formule II

   $R'_m (R'' Y)_n SiX_{(4-m-n)}$ (II)

   dans laquelle R' représente un groupe alkyle ou alcényle ; R" représente un groupe alkylène ou alcénylène, ces restes pouvant être interrompus par des atomes d'oxygène ou de soufre ou par des groupes -NH ; X représente un atome d'hydrogène ou d'halogène ou un groupe hydroxy, alcoxy ou le groupe $-NR'''_2$ (R"' représentant un atome d'hydrogène et/ou un groupe alkyle) ; Y représente un atome d'halogène ou un groupe éventuellement substitué amino, amide, aldéhyde, alkylcarbonyle, carboxy, mercapto, cyano, alcoxy, alcoxycarbonyle, acide sulfonique, acide phosphorique, acryloxy, méthacryloxy, époxy ou vinyle ; m et n valent 0, 1, 2 ou 3, et la somme (m + n) vaut 1, 2 ou 3 ;
   et éventuellement
   (c) au moins un oxyde, soluble dans le milieu de réaction et peu volatil, d'un élément des groupes principaux Ia à Va ou du sous-groupe IVb ou Vb du système ou tableau périodique, à l'exclusion du titane, ou d'au moins un composé de ces éléments, soluble dans le milieu de réaction et pouvant former un oxyde peu volatil,

   avec une quantité d'eau inférieure à la quantité stoéchiométriquement nécessaire pour l'hydrolyse complète des groupes hydrolysables, que l'on peut introduire avec des agents d'adsorption contenant de l'humidité, avec des solvants organiques contenant de l'eau ou avec des hydrates de sels, éventuellement en présence d'un catalyseur de condensation avec, par rapport au nombre total des moles des composants de départ, utilisation de 5 à 70 moles % du composant (a), 30 à 95 moles % du composant (b) et 0 à 65 moles % du composant (c).

2. Laque selon la revendication 1, caractérisée en ce qu'elle a été soumise à la poursuite de la condensation par addition d'au moins la quantité d'eau nécessaire pour l'hydrolyse des groupes hydrolysables restants, ainsi qu'éventuellement d'un catalyseur de la condensation.

3. Laque selon la revendication 1 ou 2, caractérisée en ce qu'elle contient des additifs usuels pour des laques, comme des diluants organiques, des agents de fluidité ou d'écoulement, des colorants, des agents de stabilisation à l'égard de l'ultra-violet, des charges, des régulateurs de la viscosité ou des inhibiteurs d'une oxydation.

4. Laque selon l'une des revendications 1 à 3, caractérisée en ce que, par rapport au nombre total des moles des composants de départ, on utilise 20 à 40 moles % du composant (a), 40 à 80 moles % du composant (b) et, au maximum, 40 moles % du composant (c).

5. Procédé de préparation de revêtements résistant aux égratignures et à l'abrasion, caractérisé en ce qu'on applique sur un substrat, et fait durcir, une laque selon une des revendications 1 à 4.

6. Procédé selon la revendication 5, caractérisé en ce qu'on soumet la couche de laque ainsi appliquée à un durcissement par un traitement thermique à une température allant jusqu'à 150 ° C, avantageusement de 60 à 130 ° C.

7. Substrats munis d'un revêtement résistant aux égratignures et à l'abrasion, que l'on peut obtenir selon le procédé de l'une des revendications 5 ou 6.